# EUROPÄISCHE PATENTSCHRIFT

(11) **EP 0 759 495 B1**
(45) Veröffentlichungstag und Bekanntmachung des Hinweises auf die Patenterteilung: **17.02.1999**
(21) Anmeldenummer: 95112678.8
(22) Anmeldetag: 11.08.1995
(51) Int. Cl.: E05F 15/10, B60J 7/057

(54) **Motor-Getriebe-Antriebseinheit mit durch eine Notbetätigung auskuppelbarer Getriebeübertragung**
Motor-gearing transmission unit which can be disengaged for emergency manual actuation
Transmission motorisée d'entraînement avec interruption de la transmission en cas d'actionnement d'urgence

(43) Veröffentlichungstag der Anmeldung: 26.02.1997
(73) Patentinhaber: SIEMENS AKTIENGESELLSCHAFT, 80333 München (DE)
(72) Erfinder: Gleixner, Ronald, Dipl.-Ing., D-97199 Ochsenfurt (DE)

(56) Entgegenhaltungen:
- DE-C- 4 403 574
- FR-A- 2 664 643

## Beschreibung

Die Erfindung bezieht sich auf eine Motor-Getriebe-Antriebseinheit mit durch eine Notbetätigung auskuppelbarer Getriebeübertragung gemaß Patentanspruch 1.

Eine Motor-Getriebe-Antriebseinheit mit den Merkmalen a) und b) des Patentanspruchs 1 ist z.B. durch die EP-A2-0 410 487 bekannt.

Im bekannten Fall der EP-A2-0 410 487 erfolgt die zweite Kupplungsverbindung über eine formschlüssige Drehmitnahme dadurch, daß die Außenfläche des Notbetatigungsteils neben einem zylindrischen einen axial verlaufenden außensechskantförmigen Abschnitt aufweist, der in einer entsprechenden sechskantförmigen axialen Ausnehmung des Abtriebszahnrads und der Abtriebswelle derart formschlüssig aufgenommen wird, daß einerseits im Normalbetrieb ein Formschluß zwischen dem Abtriebszahnrad und der Abtriebswelle über das Notbetätigungsteil gegebenen und im Fall einer Notbetatigung durch axiales Vordrucken des Notbetatigungsteils gegen eine vorgespannte Schraubendruckfeder der Formschluß des Notbetatigungsteils zu dem Abtriebszahnrad aufgehoben ist.

Vorliegender Erfindung liegt die Aufgabe zugrunde, eine Motor-Getriebe-Antriebseinheit mit einer Notbetätigung auszurüsten, ohne daß dadurch die Baugröße der Antriebseinheit vergrößert werden muß. Dies gelingt durch die Lehre gemaß Patentanspruch 1; vorteilhafte Ausgestaltungen der Erfindung sind jeweils Gegenstand der Unteransprüche.

Durch die erfindungsgemäße zweite Kupplungsverbindung in Form einer Kegelradverzahnung zwischen der Abtriebswelle einerseits und der Antriebswelle andererseits wird bei für eine hinreichende Drehmomentenübertragung gewährleistetem Überdeckungsgrad nur ein axialer Hub zur Lösung der zweiten Kupplungsverbindung benötigt, der der axialen Höhe der Zahnflanken der Kegelradverzahnung entspricht und somit um ein Vielfaches kleiner gehalten werden kann als der im bekannten Fall notwendige Hub, der durch die axiale Erstreckung des außensechskantförmigen Abschnittes bestimmt ist.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: in einem axialen Schnittbild eine erste Ausführung der erfindungsgemäßen Motor-Getriebe-Antriebseinheit im Normalbetrieb;
- FIG 2: die Anordnung gemäß FIG 1 im Schnittverlauf II-II;
- FIG 3: die Motor-Getriebe-Antriebseinheit gemäß FIG 1 im Notbetätigungsbetrieb;
- FIG 4: eine weitere Ausgestaltung der Erfindung im Notbetätigungsbetrieb mit zusätzlich eingestecktem Notbetätigungswerkzeug in Form einer Handkurbel;
- FIG 5: die Anordnung gemaß FIG 4 im Schnittverlauf V-V, jedoch ohne eingesteckte Handkurbel.

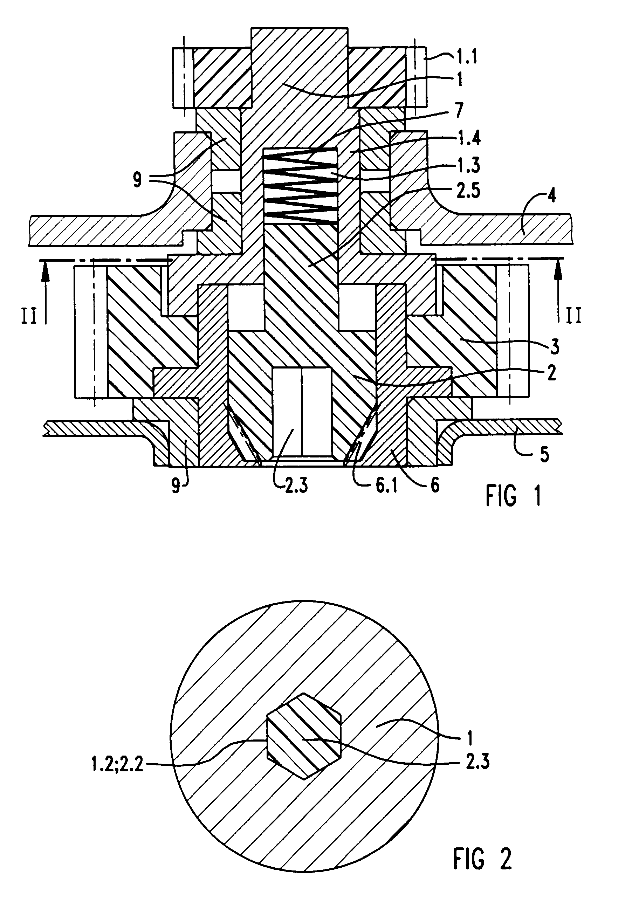

FIG 1-3 zeigen eine Motor-Getriebe-Antriebseinheit zum Antrieb eines Schiebedaches in einem Kraftfahrzeug mit einem metallenen Getriebegehäuse 4 und einem diesen verschließenden metallenen Getriebegehäusedeckel 5. Am bzw. im Getriebegehäuse 4 bzw. Getriebegehäusedeckel 5 sind als Haupt-Bauteile eine vorzugsweise metallene Abtriebswelle 1 mit ebenfalls einem metallenen Abtriebsritzel 1.1 und eine mit der Abtriebswelle 1 durch eine axial verschiebbare erste Kupplungsverbindung (1.2;2.2) in Drehmitnahme stehende Antriebswelle 2 sowie eine die Antriebswelle 2 im Normalbetrieb antreibendes, vorzugsweise aus Kunststoff gespritztes, Abtriebszahnrad 3 eines von einem hier nicht dargestellten Elektromotor angetriebenen Getriebes gelagert.

Als axial verschiebbare erste Kupplungsverbindung zwischen der Abtriebswelle 1 und der Antriebswelle 2 wird gemaß FIG 1,2 ein axial vorstehender, in eine Einstecköffnung 1.3 der Abtriebswelle 1 reichender Kupplungsstift 2.5 der Antriebswelle 2 von einer Kupplungs-Hülse 1.4 der Abtriebswelle 1 mit formschlüssiger Drehmitnahme umgriffen; dazu ist zwischen dem Kupplungsstift 2.5 und der Kupplungs-Hülse 1.4 - wie aus dem Schnittbild gemäß FIG 2 ersichtlich - jeweils ein Vielkant mit axial verlaufenden Vielkant-Flächen 1.2 bzw.2.2 in Form eines Sechskantes vorgesehen.

Als lösbare zweite Kupplungsverbindung zwischen dem Abtriebszahnrad 3 und der Antriebswelle 2 ist erfindungsgemäß eine Kegelradverzahnung mit schräg zur Achse der Antriebswelle 2 verlaufenden antriebswellenseitigen Zahnflanken 2.1 und korrespondierenden Zahnflanken 6.1 an einem gemäß FIG 1,2 mit dem Abtriebszahnrad 3, z.B. durch zahnartig ineinandergreifenden Formschluß, fest verbundenen Zwischenkupplungsstück 6 vorgesehen.

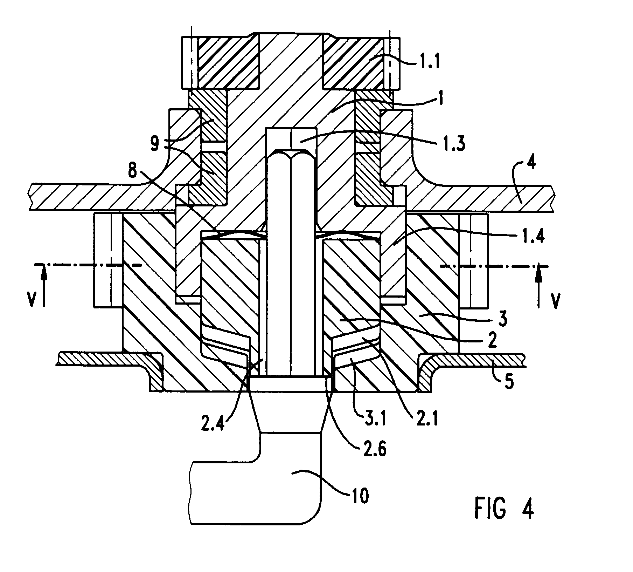

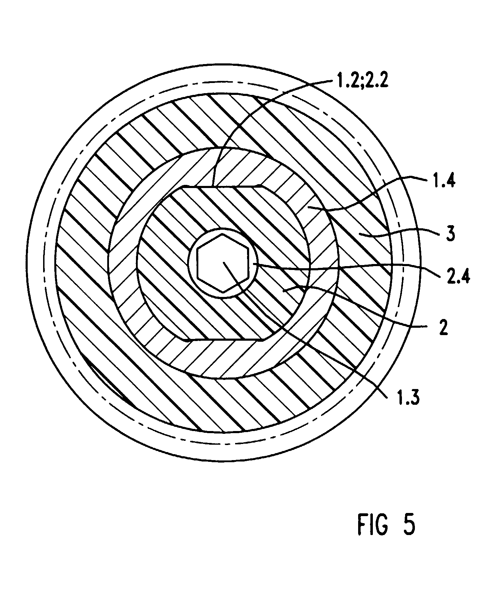

Gemäß dem Ausführungsbeispiel nach FIG 1,2 ist das Zwischenkupplungsstück 6 aus Metall gebildet und daher über ein Bundlager 9 im ebenfalls metallenen Getriebegehäusedeckel 5 gelagert. Beim Ausführungsbeispiel nach FIG 4,5 sind in vorteilhafter Weise unter Weglassung des Zwischenkupplungsstückes 6 das Abtriebszahnrad 3 des Getriebes als auch die Antriebswelle 2 als Kunststoff-Spritzgußteile hergestellt, wobei einerseits auf gesonderte Bundlager verzichtet und andererseits durch die damit mögliche radiale Erweiterung der Antriebswelle 2 der radiale Überdeckungsgrad der Zahnflanken vergrößert und dadurch deren axiale Höhe und in Folge davon der axiale Hub zur Lösung der zweiten Kupplungsverbindung in vorteilhafter Weise noch weiter verringert werden können; dementsprechend ist als bevorzugter Kegelwinkel bei einer Ausführung mit einem metallenen Kupplungszwischenstücks 6 gemäß FIG 1-3 vorzugsweise ein Kegelwinkel von ca. 60° und bei der Ausführung mit einer einstückigen, als Kunststoffspritzgußteil hergestellten, radial erweiterten Antriebswelle 2 mit direktem Antrieb durch das Abtriebszahnrad 3 gemäß FIG 4,5 vorzugsweise ein Kegelwinkel von bevorzugt ca. 150° vorgesehen.

Als axial verschiebbare erste Kupplungsverbindung 1.2;2.2 zwischen der Antriebswelle 2 und der Abtriebswelle 1 übergreift letztere bei dem weiteren Ausführungsbeispiel gemäß FIG 4,5 die Antriebswelle 2 mit einer Kupplungs-Hülse 1.4 außenrandseitig; zur formschlüssigen gegenseitigen Mitnahme sind wieder - wie aus dem Schnittbild gemäß FIG 5 ersichtlich - einander korrespondierende Vielkantflächen 1.2 bzw.2.2 am Innenumfang der Kupplungs-Hülse 1.4 der Abtriebswelle 1 bzw. am Außenumfang der Antriebswelle 2 vorgesehen.

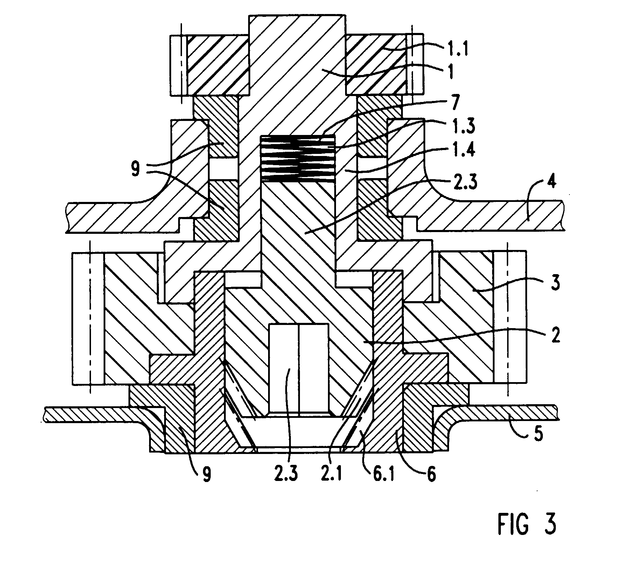

Im Falle einer Notbetätigung wird ein Notbetätigungswerkzeug, insbesondere eine in FIG 1,2 wegen der deutlicheren Darstellung der übrigen Bauteile nicht eingebrachte, jedoch in FIG 3 angedeutete Handkurbel 10 beim ersten Ausführungsbeispiel in die Einstecköffnung 2.3 der Antriebswelle 2 eingeführt und durch axiales Vordrücken die Antriebswelle 2 entgegen dem Druck einer Schraubenfeder 7 gemäß FIG 1,2 soweit axial angehoben, daß sich die Kupplung der Kegelradverzahnung löst. Die Einstecköffnung 2.3 der Antriebswelle 2 ist mit einem Innen-Vielkant versehen, derart daß durch Dreh-Betätigung der mit einem korrespondierenden Außen-Vielkant versehenen Handkurbel 10 die Antriebswelle 2 ohne eine Kupplungsverbindung zum Abtriebszahnrad 3 über die dauernd in Verbindung stehende axial verschiebliche erste Kupplungsverbindung 1.2;2.2 die Abtriebswelle 1 mit ihrem Abtriebsritzel 1.1 von Hand gedreht und damit das Schiebedach unabhängig von seinem motorischen Antrieb verstellt werden kann.

Da die über Bundlager 9 im Getriebegehäuse 4 gelagerte Abtriebswelle 1 üblicherweise in Metall ausgeführt ist, kann gemäß einer zweiten Ausgestaltung entsprechend FIG 4,5 die Drehmomentübertragung durch eine eingesteckte Handkurbel 10, insbesondere bei als Kunststoff-Spritzgußteil hergestellter Antriebswelle 2, dadurch sichergestellt bzw. vergrößert werden, daß die Antriebswelle 2 mit einer axial durchgehenden Durchstecköffnung 2.4 derart vorgesehen ist, daß das freie mit einem Vielkant versehene Ende der Handkurbel 10 durch die Durchstecköffnung 2.4 der Antriebswelle 2 mit lediglich axialem Anschlag 2.6 zu deren axialem Auskuppeln frei durch- und dann erst in Drehmitnahme formschlüssig in die Einstecköffnung 1.3 der Abtriebswelle 1 eingesteckt wird; zur gegenseitigen formschlüssigen Drehmitnahme sind das verlängerte freie Ende der Handkurbel 10 bzw. die Kupplungs-Hülse 1.4 der Einstecköffnung 1.3 der Abtriebswelle 1 wiederum mit korrespondierenden Vielkantflächen versehen. Durch die Wahl einer Federringscheibe 8, insbesondere einer Wellfeder, mit Mittelöffnung gemaß FIG 4 kann in vorteilhaftem Unterschied zu einer Schraubenfeder als axial verspannendem Federelement die Handkurbel 10 problemlos in die Einstecköffnung 1.3 der Abtriebswelle 1 gebracht und insbesondere die Bauhöhe des Federelementes wesentlich verringert werden.

## Patentansprüche

1. Motor-Getriebe-Antriebseinheit mit durch eine Notbetätigung auskuppelbarer Getriebeübertragung zu einer Abtriebswelle (1), insbesondere für ein Schiebedach in einem Kraftfahrzeug, mit den Merkmalen:
a) Die Abtriebswelle (1) steht über eine axial verschiebbare erste Kupplungsverbindung (1.2;2.2) in dauernder Drehmitnahmeverbindung zu einer Antriebswelle (2);
b) die Antriebswelle (2) steht über eine bei Notbetätigung durch ihre axiale Verschiebung lösbare zweite Kupplungsverbindung (2.1;6.1 bzw.2.1;3.1) in Drehmitnahmeverbindung mit einem Abtriebszahnrad (3) des Getriebes;
c) die zweite Kupplungsverbindung ist nach Art einer Kegelradverzahnung mit in schrägem Winkel zu der axialen Verschiebung verlaufenden Zahnflanken (2.1;3.1 bzw.2.1;6.1) ausgebildet.

2. Motor-Getriebe-Antriebseinheit nach dem vorhergehenden Anspruch mit dem Merkmal:
d) Das Abtriebszahnrad (3) des Getriebes steht über ein Zwischen-Kupplungsstück (6) in mittelbarer Dehmitnahmeverbindung (2.1;6.1) mit der Antriebswelle (1). (FIG 1-3)

3. Motor-Getriebe-Antriebseinheit nach dem vorhergehenden Anspruch mit dem Merkmal:
e) Die Zahnflanken (2.1;6.1) der lösbaren zweiten Kupplungsverbindung sind vorzugsweise unter einem Kegelwinkel von ca. 60° angeordnet. (FIG 1-3)

4. Motor-Getriebe-Antriebseinheit nach Anspruch 1 mit dem Merkmal:
f) Das Abtriebszahnrad (3) des Getriebes steht, insbesondere unter Fortfall eines Zwischenkupplungsstücks (6) und entsprechender radialer Verbreiterung der Antriebswelle (2), in unmittelbarer Drehmitnahmeverbindung (2.1;3.1) mit der Antriebswelle (2). (FIG 4,5)

5. Motor-Getriebe-Antriebseinheit nach dem vorhergehenden Anspruch mit dem Merkmal:
g) Die Zahnflanken (2.1;3.1) der lösbaren zweiten Kupplungsverbindung sind vorzugsweise unter einem Kegelwinkel von ca. 150° angeordnet. (FIG 4,5)

6. Motor-Getriebe-Antriebseinheit nach zumindest einem der vorhergehenden Ansprüche mit dem Merkmal:
h) Die axial verschiebbare erste Kupplungsverbindung (1.2;2.2) erfolgt formschlüssig, insbesondere in Form eines Vielkants, zwischen einem in eine Einstecköffnung (1.3) der Abtriebswelle (1) axial vorstehenden Kupplungsstift (2.4) der Antriebswelle (2) einerseits und einer diesen übergreifenden Kupplungs-Hülse (1.4) der Abtriebswelle (1) andererseits. (FIG 1-3)

7. Motor-Getriebe-Antriebseinheit nach zumindest einem der vorhergehenden Ansprüche 1-5 mit dem Merkmal:
i) Die axial verschiebbare erste Kupplungsverbindung (1.2;2.2) erfolgt formschlüssig, insbesondere in Form eines Vielkants, zwischen der Antriebswelle (2) einerseits und einer diese übergreifenden Kupplungs-Hülse (1.4) der Abtriebswelle (1) andererseits. (FIG 4,5)

8. Motor-Getriebe-Antriebseinheit nach zumindest einem der vorhergehenden Ansprüche mit dem Merkmal:
j) Die Abtriebswelle (1) und die Antriebswelle (2) sind durch ein Federelement ((7 bzw.8) axial gegeneinander verspannt.

9. Motor-Getriebe-Antriebseinheit nach Anspruch 8 mit dem Merkmal:
k) Die Abtriebswelle (1) und die Antriebswelle (2) sind durch eine Schraubenfeder (7) axial gegeneinander verspannt. (FIG 1-3)

10. Motor-Getriebe-Antriebseinheit nach Anspruch 8 mit dem Merkmal:
l) Die Abtriebswelle (1) und die Antriebswelle (2) sind durch eine Federringscheibe (8), insbesondere eine Wellfeder mit einer Mittelöffnung, axial gegeneinander verspannt. (FIG 4,5)

11. Motor-Getriebe-Antriebseinheit nach zumindest einem der vorhergehenden Ansprüche mit dem Merkmal:
m) Die Antriebswelle (2) ist mit einer axialen Notbetätigungs-Einstecköffnung (2.3) mit axialem und tangentialem Formschluß gegenüber einem Notbetätigungswerkzeug, insbesondere einer Handkurbel (10), versehen. (FIG 1-3)

12. Motor-Getriebe-Antriebseinheit nach zumindest einem der vorhergehenden Ansprüche 1-10 mit dem Merkmal:
n) Die Antriebswelle (2) ist mit einer Durchstecköffnung (2.4) mit lediglich axialem Anschlag (2.6) gegenüber einem Notbetätigungswerkzeug, insbesondere eine Handkurbel (10), ausgebildet;
o) die Abtriebswelle (1) ist mit einer Einstecköffnung (1.3) zur Aufnahme eines freien Endes des Notbetätigungswerkzeuges, insbesondere einer Handkurbel (10), mit tangentialem Formschluß, gegenüber dem Notbetätigungswerkzeug, ausgebildet. (FIG 4,5)

13. Motor-Getriebe-Antriebseinheit nach zumindest einem der vorhergehenden Ansprüche 1-12 mit dem Merkmal:
p) Zumindest die Antriebswelle (2) bzw. die Abtriebswelle (1) sind als Metall-Teile ausgebildet. (FIG 1-3)

14. Motor-Getriebe-Antriebseinheit nach zumindest einem der vorhergehenden Ansprüche 1-12 mit dem Merkmal:
q) Zumindest das Abtriebszahnrad (3) und die Antriebswelle (2) sind als, insbesondere spritzgegossene, Kunststoff-Teile bzw. die Abtriebswelle (1) als Metall-Teil ausgebildet. (FIG 4,5)

## Claims

1. Motor/gear drive unit with gear transmission capable of being uncoupled by emergency actuation, to an output shaft (1), in particular for a sliding roof in a motor vehicle, having the features:
a) the output shaft (1) is in permanent rotational take-up connection with a drive shaft (2) via an axially displaceable first coupling connection (1.2; 2.2);
b) the drive shaft (2) is in rotational take-up connection with an output gearwheel (3) of the gear via a second coupling connection (2.1; 6.1 or 2.2; 3.1) releasable as a result of the axial displacement of the said drive shaft during emergency actuation;
c) the second coupling connection is designed in the manner of a bevel-wheel toothing with tooth flanks (2.1; 3.1 or 2.1; 6.1) running at an oblique angle to the axial displacement.

2. Motor/gear drive unit according to the preceding Claim, having the feature:
d) the output gearwheel (3) of the gear is in indirect rotational take-up connection (2.1; 6.1) with the drive shaft (1) via an intermediate coupling piece (6). (Figures 1 - 3)

3. Motor/gear drive unit according to the preceding Claim, having the feature:
e) the tooth flanks (2.1; 6.1) of the releasable second coupling connection are arranged preferably at a taper angle of approximately 60°. (Figure 1-3).

4. Motor/gear drive unit according to Claim 1, having the feature:
f) the output gearwheel (3) of the gear is in direct rotational take-up connection (2.1; 3.1) with the drive shaft (2), in particular if an intermediate coupling piece (6) is dispensed with and the drive shaft (2) is radially widened correspondingly. (Figures 4, 5)

5. Motor/gear drive unit according to the preceding Claim, having the feature:
g) the tooth flanks (2.1; 3.1) of the releasable second coupling connection are arranged preferably at a taper angle of approximately 150°. (Figures 4, 5)

6. Motor/gear drive unit according to at least one of the preceding Claims, having the feature:
h) the axially displaceable first coupling connection (1.2; 2.2) is made positively, in particular in the form of a polygon, between a coupling pin (2.4) of the drive shaft (2), the said coupling pin projecting axially into an insertion orifice (1.3) of the output shaft (1), on the one hand, and a coupling sleeve (1.4) of the output shaft (1), the said coupling sleeve engaging over the said coupling pin, on the other hand. (Figures 1-3)

7. Motor/gear drive unit according to at least one of the preceding Claims 1-5, having the feature:
i) the axially displaceable first coupling connection (1.2; 2.2) is made positively, in particular in the form of a polygon, between the drive shaft (2), on the one hand, and a coupling sleeve (1.4) of the output shaft (1), the said coupling sleeve engaging over the said drive shaft, on the other hand. (Figures 4, 5)

8. Motor/gear drive unit according to at least one of the preceding Claims, having the feature:
j) the output shaft (1) and the drive shaft (2) are braced axially relative to one another by means of a spring element (7 or 8).

9. Motor/gear drive unit according to Claim 8, having the feature:
k) the output shaft (1) and the drive shaft (2) are braced axially relative to one another by means of a helical spring (7). (Figures 1-3)

10. Motor/gear drive unit according to Claim 8, having the feature:
l) the output shaft (1) and the drive shaft (2) are braced axially relative to one another by means of a spring washer (8), in particular a corrugated washer having a central orifice. (Figures 4, 5)

11. Motor/gear drive unit according to at least one of the preceding Claims, having the feature:
m) the drive shaft (2) is provided with an axial emergency-actuation insertion orifice (2.3) having an axial and tangential positive connection relative to an emergency-actuation tool, in particular a crankhandle (10). (Figures 1-3)

12. Motor/gear drive unit according to at least one of the preceding Claims 1-10, having the feature:
n) the drive shaft (2) is designed with an insertion orifice (2.4) having only an axial abutment (2.6) relative to an emergency-actuation tool, in particular a crankhandle (10);
o) the output shaft (1) is designed with an insertion orifice (1.3) for receiving a free end of the emergency-actuation tool, in particular a crankhandle (10), the said insertion orifice having a tangential positive connection relative to the emergency-actuation tool. (Figures 4, 5)

13. Motor/gear drive unit according to at least one of the preceding Claims 1-12, having the feature:
p) at least the drive shaft (2) and the output shaft (1) are designed as metal parts. (Figures 1-3)

14. Motor/gear drive unit according to at least one of the preceding Claims 1-12, having the feature:
q) at least the output gear wheel (3) and the drive shaft (2) are designed as, in particular, injection-moulded plastic parts and the output shaft (1) is designed as a metal part. (Figures 4, 5)

## Revendications

1. Unité d'entraînement à moteur et à engrenage comportant une transmission d'engrenage pouvant être découplée d'un arbre (1) de sortie par un actionnement d'urgence, notamment pour un toit ouvrant de véhicule automobile, comportant les caractéristiques :
a) l'arbre (1) de sortie est en liaison d'entraînement en rotation permanente avec un arbre (2) d'entraînement par l'intermédiaire d'une première liaison (1.2; 2.2) d'accouplement coulissant axialement ;
b) l'arbre (2) d'entraînement est en liaison d'entraînement en rotation avec une roue (3) dentée de sortie de l'engrenage par l'intermédiaire d'une deuxième liaison (2.1 ; 6.1 ou 2.1 ; 3.1) d'accouplement amovible, en cas d'actionnement d'urgence, par le coulissement axial de l'arbre d'entraînement ;
c) la deuxième liaison d'accouplement est réalisée à la façon d'une denture de roue conique ayant des flancs (2.1 ; 3.1 ou 2.1 ; 6.1) de dents s'étendant suivant un angle oblique par rapport au coulissement axial.

2. Unité d'entraînement à moteur et à engrenage suivant la revendication précédente, comportant la caractéristique :
d) la roue (3) dentée de sortie de l'engrenage est en liaison (2.1 : 6.1) indirecte d'entraînement en rotation avec l'arbre (1) d'entraînement par l'intermédiaire d'une pièce (6) d'accouplement intermédiaire. (Figures 1 à 3)

3. Unité d'entraînement à moteur et à engrenage suivant la revendication précédente, comportant la caractéristique :
e) les flancs (2.1 ; 6.1) de dents de la deuxième liaison d'accouplement amovible sont disposés de préférence avec un angle de tronc de cône d'environ 60°. (Figures 1 à 3)

4. Unité d'entraînement à moteur et à engrenage suivant la revendication 1, comportant la caractéristique :
f) la roue (3) dentée de sortie de l'engrenage est, notamment en supprimant une pièce (6) d'accouplement intermédiaire et en élargissant radialement en conséquence l'arbre (2) d'entraînement, en liaison (2.1; 3.1) directe d'entraînement en rotation avec l'arbre (2) d'entraînement. (Figures 4, 5)

5. Unité d'entraînement à moteur et à engrenage suivant la revendication précédente, comportant la caractéristique :
g) les flancs (2.1 ; 3.1) de dents de la deuxième liaison d'accouplement amovible sont disposés de préférence avec un angle de tronc de cône d'environ 150°. (Figures 4, 5)

6. Unité d'entraînement à moteur et à engrenage suivant au moins l'une des revendications précédentes, comportant la caractéristique :
h) la première liaison (1.2; 2.2) d'accouplement coulissant axialement s'effectue avec complémentarité de forme, notamment en forme d'un polygone, entre une broche (2.4) d'accouplement, axialement en saillie dans une ouverture (1.3) d'emmanchement de l'arbre (1) de sortie, de l'arbre (2) d'entraînement), d'une part, et une douille (1.4) d'accouplement, chevauchant cette broche, de l'arbre (1) de sortie, d'autre part. (Figures 1 à 3)

7. Unité d'entraînement à moteur et à engrenage suivant au moins l'une des revendications 1 à 5 précédentes, comportant la caractéristique :
i) la première liaison (1.2 ; 2.2) d'accouplement coulissant axialement s'effectue par complémentarité de forme, notamment sous la forme d'un polygone, entre l'arbre (2) d'entraînement, d'une part, et une douille (1.4) d'accouplement qui le chevauche, de l'arbre (1) de sortie, d'autre part. (Figures 4, 5)

8. Unité d'entraînement à moteur et à engrenage suivant au moins l'une des revendications précédentes, comportant la caractéristique :
j) l'arbre (1) de sortie et l'arbre (2) d'entraînement sont bloqués axialement l'un par rapport à l'autre par l'intermédiaire d'un élément (7 ou 8) élastique.

9. Unité d'entraînement à moteur et à engrenage suivant la revendication 8, comportant la caractéristique :
k) l'arbre (1) de sortie et l'arbre (2) d'entraînement sont bloqués axialement l'un par rapport à l'autre par un ressort (7) hélicoïdal. (Figures 1 à 3)

10. Unité d'entraînement à moteur et à engrenage suivant la revendication 8, comportant la caractéristique :
I) l'arbre (1) de sortie et l'arbre (2) d'entraînement sont bloqués axialement l'un par rapport à l'autre par une rondelle (8) élastique, notamment par une rondelle ondulée à ouverture centrale. (Figures 4, 5)

11. Unité d'entraînement à moteur et à engrenage suivant au moins l'une des revendications précédentes, comportant la caractéristique :
m) l'arbre (2) d'entraînement est muni d'une ouverture (2.3) axiale d'emmanchement d'actionnement d'urgence avec complémentarité de forme axiale et tangentielle par rapport à un outil d'actionnement d'urgence, notamment à une manivelle (10). (Figures 1 à 3)

12. Unité d'entraînement à moteur et à engrenage suivant au moins l'une des revendications 1 à 10 précédentes, comportant la caractéristique :
n) l'arbre (2) d'entraînement est réalisé en ayant une ouverture (2.4) de traversée à butée (2.6) uniquement axiale par rapport à un outil d'actionnement d'urgence, notamment à une manivelle (10);
o) l'arbre (1) de sortie est réalisé en ayant une ouverture (1.3) d'emmanchement pour recevoir une extrémité libre de l'outil d'actionnement d'urgence, notamment d'une manivelle (10), avec complémentarité de forme tangentielle, par rapport à l'outil d'actionnement d'urgence. (Figures 4, 5)

13. Unité d'entraînement à moteur et à engrenage suivant au moins l'une des revendications 1 à 12 précédentes, comportant la caractéristique :
p) au moins l'arbre (2) d'entraînement et l'arbre (1) de sortie sont réalisés comme pièces métalliques. (Figures 1 à 3)

14. Unité d'entraînement à moteur et à engrenage suivant au moins l'une des revendications 1 à 12 précédentes, comportant la caractéristique :
q) au moins la roue (3) dentée de sortie et l'arbre (2) d'entraînement sont réalisés en pièces en matière plastique, notamment moulées par injection, et l'arbre (1) de sortie est réalisé comme pièce métallique. (Figures 4, 5)
